Europäisches Patentamt

European Patent Office

Office européen des brevets

(11) Veröffentlichungsnummer: **0 012 917**
**A1**

(12) **EUROPÄISCHE PATENTANMELDUNG**

(21) Anmeldenummer: **79105073.5**

(22) Anmeldetag: **10.12.79**

(51) Int. Cl.³: **G 01 S 13/74**

(30) Priorität: **22.12.78 DE 2855808**

(43) Veröffentlichungstag der Anmeldung:
**09.07.80 Patentblatt 80/14**

(84) Benannte Vertragsstaaten:
**AT BE CH DE FR GB IT NL SE**

(71) Anmelder: **SIEMENS AKTIENGESELLSCHAFT**
**Postfach 22 02 61**
**D-8000 München 22(DE)**

(72) Erfinder: **Grafinger, Wilhelm**
**Connollystrasse 26**
**D-8000 München 40(DE)**

(54) **Homodyn-Übertragungssystem.**

(57) Das Homodyn-Übertragungssystem mit Reflexionsfaktormodulation enthält eine Abfrageeinheit (1) und wenigstens eine Rückmeldeeinheit (2). Dabei enthält die Abfrageeinheit (1) eine Sendeschaltung und eine Schaltung zum Empfangen eines Informationen enthaltenden Rückmeldesignals von der Rückmeldeeinheit (2) und die Rückmeldeeinheit (2) einen Zweiseitenband-Reflexionsfaktor-Modulator zur Erzeugung eines Unterträgers. Die Empfangsschaltung der Abfrageeinheit (1) weist zwei eingangsseitig über einen Leistungsteiler miteinander verbundene und ausgangsseitig an ein Summierglied angeschlossene Empfangskanäle auf, die jeweils einen Mischer mit nachfolgenden Filterelementen enthalten. In einem der Empfangskanäle ist vor dem Mischer ein Mikrowellenphasenschieber mit 90°-Phasenverschiebung eingeschaltet. Ein weiterer 90°-Phasenschieber für das Basisbandsignal ist in einem der Empfangskanäle zwischen Mischer und Summierglied eingeschaltet.

FIG 3

SIEMENS AKTIENGESELLSCHAFT    Unser Zeichen:
Berlin und München    VPA 78 P 6 8 3 1 EUR

## Homodyn-Übertragungssystem

Die Erfindung bezieht sich auf ein Homodyn-Übertragungssystem mit Reflexionsfaktormodulation mit einer Abfrage- und wenigstens einer Rückmeldeeinheit, bei dem die Abfrageeinheit (Lesegerät) eine Sendeschaltung zum Aussenden eines Abfragesignals an die Rückmeldeeinheit und eine Schaltung zum Empfangen eines Information enthaltenden Rückmeldesignals von der Rückmeldeeinheit enthält und die Rückmeldeeinheit (Antwortgerät) einen Zweiseitenband-Reflexionsfaktor-Modulator zur Erzeugung eines Unterträgers für die Informationsübertragung zum Abfragegerät aufweist. Ein solches Übertragungssystem ist beispielsweise durch die DE-AS 25 24 571 bekannt.

Die Informationsübertragung vom Antwortgerät zum Lesegerät erfolgt im Mikrowellenbereich, beispielsweise bei 2 bis 3 GHz. Es wird dabei angestrebt, ein Antwortgerät mit geringem Aufwand und geringem Stromverbrauch zu er-

Klu 1 Shy / 14.12.1978

halten. Daraus ergibt sich auch, daß im Antwortgerät keine Mikrowellenoszillatoren eingesetzt werden, sondern der Mikrowellenträger im Abfragegerät erzeugt und dem Antwortgerät als Festfrequenzwelle zugestrahlt wird. Im Antwortgerät wird die Nachricht dem Mikrowellensignal durch einen Reflexionsfaktormodulator aufmoduliert.

Das Signal gelangt über eine Antennenstrecke zum Mikrowellenempfänger des Lesegerätes, wo es in das Basisband umgesetzt wird. Die Information wird im Antwortgerät nicht direkt auf den einlaufenden Mikrowellenträger aufmoduliert, sondern es wird durch geeignete Modulation des Reflexionsfaktors vorerst ein Unterträger für die Informationsübertragung zum Abfragegerät erzeugt. Durch die Modulationsmaßnahmen im Antwortgerät entstehen eng benachbart zum Mikrowellenträger Seitenfrequenzen. Einem beispielsweise sinusförmigen Unterträger, der ohne das nachstehend näher erläuterte Nullsignalproblem vom Antwortgerät zum Abfragegerät übertragen werden kann, kann mittels einer der bekannten Modulationsarten (z.B. PM, FM) die Information im Antwortgerät auf einfache Weise aufmoduliert werden.

Wie vorstehend bereits angesprochen, besteht eine Schwierigkeit darin, einen Unterträger ohne Nullsignalproblem zu übertragen, das durch den symmetrischen Zweiseitenbandbetrieb entsteht. Bei diesem wird bei bestimmten Phasenlagen die Signalamplitude Null.

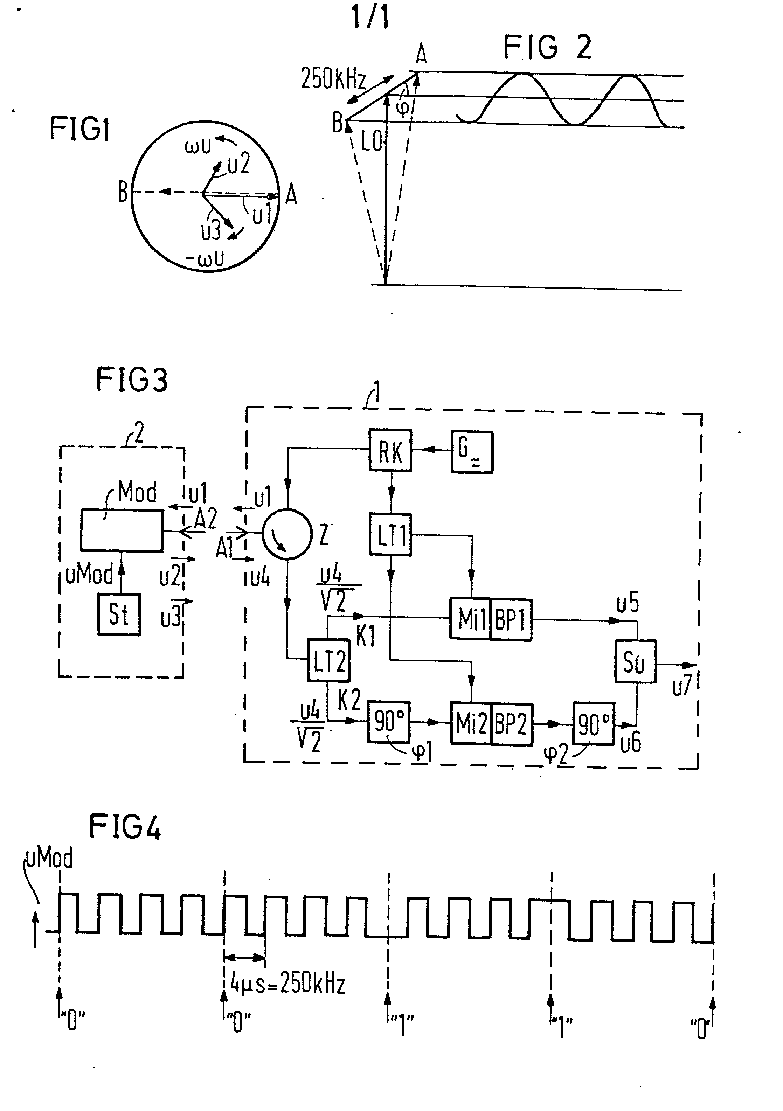

Anhand der grafischen Darstellung der Signalzeiger in der Reflexionsfaktorebene des Antwortgerätes entsprechend Fig. 1 und der Signale (empfangene Signale und Lokaloszillatorsignal) im Abfragegerät entsprechend Fig. 2 wird die Zweiseitenbandmodulation und das dabei auftre-

0012917

tende Nullsignalproblem näher erläutert. In Fig. 1 sind das einlaufende Sinussignal mit u1 und die reflektierten Sinussignale mit u2 und u3 bezeichnet. Der strichliert eingezeichnete Zeiger zwischen den Punkten A und B auf der waagerechten Achse stellt den Weg der Signalzeigerspitze des resultierenden reflektierten Signals dar, das sich aus den mit der Winkelgeschwindigkeit $\omega_u$ gegensinnig umlaufenden Zeigern der reflektierten Sinussignale u2, u3 zusammensetzt. Die reflektierten Signale u2, u3 werden im Abfragegerät mit dem Signal eines Lokaloszillators umgesetzt. Dies ist im Zeigerdiagramm in Fig. 2 dargestellt. Bei einer Änderung des Abstandes zwischen Abfrage- und Antwortgerät ergibt sich durch die veränderte Laufzeit im Empfänger des Abfragegerätes eine Phasenverschiebung zwischen dem Lokaloszillatorsignal (gesendetes Signal) und den reflektierten Signalen des Antwortgerätes. Dabei dreht sich die Achse A-B, die das resultierende reflektierte Signal beinhaltet. Bei einer 90°-Lage der Achse A-B zum Zeiger LO des Lokaloszillatorsignals ist die Signalamplitude des neben dem Zeigerdiagramm in Fig. 2 eingezeichneten sinusförmigen Signals Null, d.h. es ergibt sich in dieser Lage kein Ausgangssignal im Abfragegerät.

Trotz dieses Problems ist ein Zweiseitenbandmodulator, der in idealer Form an sich lediglich ein Umspringen des Reflexionsfaktors zwischen den beiden auf der waagerechten Achse liegenden Punkten A und B erfordert, günstiger als ein Einseitenbandmodulator. Bei diesem tritt zwar das Nullsignalproblem nicht auf, er hat jedoch andere Nachteile. Wenn sich nämlich beispielsweise eine nasse Schneeschicht auf dem Antwortgerät-Gehäuse beim Betrieb des Antwortgerätes ansetzt, verschieben sich die zwei Punkte A und B im Diagramm für einen Zweiseitenbandmodulator in die Reflexionsfaktorebene hinein, der Reflexionsfaktor springt jedoch stets zwischen zwei Punkten hin und her. Bei Einseitenbandmodulation hingegen, bei der man die stetige Kreisbewegung durch ein Umspringen des Zeigers für das reflektierte Sinussignal auf beispielsweise vier Punkte annähern kann, verschieben sich diese Punkte zwar ebenfalls in die Reflexionsfaktorebene hinein, jedoch jeder Punkt auf andere Weise. Dadurch ergeben sich neben der Signaldämpfung zusätzlich Signalverzerrungen.

Der Erfindung liegt die Aufgabe zugrunde, für ein Homodyn-Übertragungssystem der eingangs beschriebenen Art eine Lösung anzugeben, mit der bei Verwendung der Zweiseitenband-Reflexionsfaktor-Modulation im Antwortgerät das Nullsignalproblem in einfacher Weise gelöst wird.

Diese Aufgabe wird gemäß der Erfindung in der Weise gelöst, daß die Empfangsschaltung der Abfrageeinheit (Lesegerät) zwei eingangsseitig über einen Leistungsteiler miteinander verbundene und ausgangsseitig an ein Summierglied angeschlossene Empfangskanäle aufweist, die jeweils einen Mischer enthalten, denen zur Umsetzung des empfangenen Signals in das Basisband ein von einem Generator in der Sendeschaltung der Abfrageeinheit ausgekoppelter Teil eines Mikrowellen-Festfrequenzsignals als Lokaloszillatorsignal zugeführt wird, daß in einem der Empfangskanäle vor dem Mischer oder in der Zuführungsleitung für das Lokaloszillatorsignal zum Mischer ein Mikrowellenphasenschieber mit $90^o$-Phasenverschiebung eingeschaltet ist und daß in einem der Empfangskanäle zwischen dem Mischer und dem Summierglied ein weiterer $90^o$-Phasenschieber für das Basisbandsignal eingeschaltet ist.

Weitere Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

In Fig. 2 ist das Homodyn-Übertragungssystem in einem Blockschaltbild dargestellt. Das Abfragegerät 1 und das Antwortgerät 2 sind jeweils strichliert umrandet. Beide Geräte sind mit jeweils einer Sende/Empfangsantenne A1 bzw. A2 ausgerüstet. Das Antwortgerät 2 enthält einen Zweiseitenband-Reflexionsfaktor-Modulator Mod sowie einen Steuerteil St für den Unterträger und die Information. Die zum Antwortgerät 2 kommende Signalspannung ist mit u1 bezeichnet, die beiden reflektierten Seitenbandsignale mit u2 und u3.

Im Abfragegerät 1 sind die Sendeschaltung und die Empfangsschaltung über einen Zirkulator Z entkoppelt. Die Sendeschaltung enthält einen ein Mikrowellen-Festfrequenzsignal erzeugenden Generator G und einen diesem nachgeschalteten Richtkoppler RK. Die Empfangsschaltung des Abfragegerätes 1 besteht aus zwei Empfangskanälen K1, K2. Die Empfangskanäle K1, K2 sind eingangsseitig über einen Leistungsteiler LT2 miteinander verbunden. Zur Umsetzung des empfangenen Mikrowellensignals in das Basisband ist in jedem Empfangskanal ein Mischer Mi1 bzw. Mi2 angeordnet, denen als Lokaloszillatorsignal ein Teil des vom Generator G in der Sendeschaltung durch den Richtkoppler RK ausgekoppelter Teil des Mikrowellen-Festfrequenzsignals über einen Leistungsteiler LT1 zugeführt wird. Den Mischern Mi1, Mi2 ist jeweils ein Bandpaß BP1, BP2 nachgeschaltet, die an ein Summierglied Su angeschaltet sind. Ferner ist im Empfangskanal K2 zwischen dem Leistungsteiler LT2 und dem Mischer Mi2 ein erster $90^\circ$-Phasenschieber $\psi 1$ (Mikrowellenphasenschieber) und zwischen dem Bandpaß BP2 und dem Summierglied ein zweiter $90^\circ$-Phasenschieber $\psi 2$ (Phasenschieber für das Basisband)

eingeschaltet. Die Phasenschieber $\varphi1$, $\varphi2$ müssen nicht zwingend im Empfangskanal K2 angeordnet sein. Wichtig ist es, daß der eine Phasenschieber in einem Leitungszweig vor der Frequenzumsetzung in das Basisband angeordnet ist und der andere Phasenschieber in einem Leitungszweig des Basisbandes angeordnet ist. So könnte der Phasenschieber $\varphi1$ (Mikrowellenphasenschieber) entweder in eine der zwei Empfangsleitungen für die beiden Mischer Mi1, Mi2 oder in eine der beiden Zuführungsleitungen für das Lokaloszillatorsignal zum Mischer (zwischen Leistungsteiler LT1 und Mischer Mi1 oder zwischen Leistungsteiler LT1 und Mischer Mi2) eingeschaltet werden. Der Phasenschieber $\varphi2$ für das Basisbandsignal kann entweder in den Empfangskanal K1 oder den Empfangskanal K2 eingeschaltet werden, jeweils zwischen den Bandpaß BP1 bzw. BP2 und das Summierglied Su. Die Phasenverschiebung von 90° kann dabei in beiden Phasenschiebern unabhängig voneinander vor- oder nacheilend sein.

Nachstehend wird die Funktion des Homodyn-Übertragungssystems näher erläutert. Der Generator G erzeugt ein Mikrowellenfestfrequenzsignal, von welchem durch den Richtkoppler RK ein Teil als Lokaloszillatorleistung dem Leistungsteiler LT1 zugeführt wird. Dieser teilt die Mikrowellenleistung in zwei gleiche Teile auf und versorgt damit die beiden Mischer Mi1 und Mi2 mit dem Lokaloszillatorsignal. Der andere Teil des Mikrowellensignals gelangt vom Richtkoppler RK zum Zirkulator Z und weiter als Sendesignal u1 zur Antenne A1 des Abfragegerätes 1. Von der Antenne A2 des Antwortgerätes 2 wird das empfangene Mikrowellenfestfrequenzsignal u1 dem Zweiseitenband-Reflexionsfaktor-Modulator Mod zugeführt. Die Steuerschaltung St liefert die Modulationsspannung $u_{Mod}$ für den Unterträger. Dieser Modulationsspannung ist die Information aufgeprägt.

Fig. 3 zeigt ein Beispiel des zeitlichen Verlaufs der Modulationsspannung $u_{Mod}$. Dabei handelt es sich um eine binäre Modulationsspannung für den Unterträger von 250 kHz. Jeweils im Abstand von vier Perioden = 16 μsec wird dem Spannungsverlauf die Information in Form eines Phasensprunges von $180^o$ für eine logische "1" aufgeprägt. Eine logische "0" bewirkt keinen Phasensprung. Der maximale Wert der Modulationsspannung $u_{Mod}$ rechteckförmigen Verlaufs entspricht dabei dem Punkt A im Zeigerdiagramm nach Fig. 1, der minimale Wert dem Punkt B in dem Zeigerdiagramm. In Fig. 3 sind als Beispiel die Informationsbits 0 0 1 1 0 eingezeichnet.

Das vom Antwortgerät 2 reflektierte Signal u2, u3 (resultierendes Signal = u4) gelangt zur Antenne A1 des Abfragegeräts 1 und über den Zirkulator Z zum Leistungsteiler LT2. Der Leistungsteiler LT2 teilt das Empfangssignal u4 auf zwei gleiche Kanäle K1 und K2 auf. Im Kanal K1 wird das Signal im Mischer Mi1 unmittelbar in das Basisband umgesetzt und als Spannung u5 dem Summierglied Su zugeführt. Im Kanal K2 wird die Signalspannung zunächst über den Mikrowellenphasenschieber $\varphi 1$, beispielsweise eine Umwegleitung der Länge $\lambda/4$, zum Mischer Mi2 geleitet, in dem die Frequenzumsetzung in das Basisband erfolgt. Über den Bandpaß BP2 gelangt das nun im Frequenzbereich des Unterträgers liegende Basisbandsignal zum Phasenschieber $\varphi 2$ und erfährt eine $90^o$-Phasenverschiebung, beispielsweise durch einen Allpaß erster Ordnung. Das phasenverschobene Signal u6 gelangt ebenfalls zum Summierglied Su, in dem die Signale der beiden Empfangskanäle K1, K2 linear summiert werden und die Ausgangsspannung u7 ergeben. Die Ausgangsspannung u7 stellt die auf den Unterträger aufmodulierte Nachricht dar, die in einem nicht gezeichneten Schaltungsteil weiterverarbeitet wird.

Bei dem erfindungsgemäßen Übertragungssystem kann im Informationssender in vorteilhafter Weise ein binärer Modulator als einfachster aller möglichen Modulatoren eingesetzt werden. Die Komponenten der Empfangskanäle sind in Streifenleitungstechnik herstellbar, was zu einer weiteren Vereinfachung des Aufbaus dieses Übertragungssystems führt. Von besonderem Vorteil ist dabei ferner, daß auch die Ablage nassen Schnees auf der Antennenabdeckung lediglich eine Signaldämpfung, jedoch keine zusätzlichen Signalverzerrungen bewirkt, wodurch sich eine hohe elektrische Funktionssicherheit ergibt.

Das Antwortgerät (Rückmeldeeinheit) kann dabei auch von mechanisch bewegten Gegenständen oder Teilen gebildet werden, indem beispielsweise eine Zahnradabtastung oder eine Abtastung bewegter Maschinenteile erfolgt.


2 Patentansprüche
4 Figuren

Patentansprüche

1. Homodyn-Übertragungssystem mit Reflexionsfaktormodulation mit einer Abfrage- und wenigstens einer Rückmeldeeinheit, bei dem die Abfrageeinheit (Lesegerät) eine Sendeschaltung zum Aussenden eines Abfragesignals an die Rückmeldeeinheit und eine Schaltung zum Empfangen eines Information enthaltenden Rückmeldesignals von der Rückmeldeeinheit enthält und die Rückmeldeeinheit (Antwortgerät) einen Zweiseitenband-Reflexionsfaktor-Modulator zur Erzeugung eines Unterträgers für die Informationsübertragung zum Abfragegerät aufweist, d a d u r c h  g e k e n n z e i c h n e t , daß die Empfangsschaltung der Abfrageeinheit (1) (Lesegerät) zwei eingangsseitig über einen Leistungsteiler (LT2) miteinander verbundene und ausgangsseitig an ein Summierglied (Su) angeschlossene Empfangskanäle (K1, K2) aufweist, die jeweils einen Mischer (Mi1, Mi2) mit nachfolgenden Filterelementen (BP1, BP2) enthalten, denen zur Umsetzung des empfangenen Signals in das Basisband ein von einem Generator (G) in der Sendeschaltung der Abfrageeinheit (1) ausgekoppelter Teil eines Mikrowellen-Festfrequenzsignals als Lokaloszillatorsignal zugeführt wird, daß in einem der Empfangskanäle (K1, K2) vor dem Mischer (Mi1, Mi2) oder in der Zuführungsleitung für das Lokaloszillatorsignal zum Mischer (Mi1, Mi2) ein Mikrowellenphasenschieber ($\varphi$ 1) mit $90^\circ$-Phasenverschiebung eingeschaltet ist und daß in einem der Empfangskanäle (K1, K2) zwischen dem Mischer (Mi1, Mi2) und dem Summierglied (Su) ein weiterer $90^\circ$-Phasenschieber ($\varphi$ 2) für das Basisbandsignal eingeschaltet ist.

2. Homodyn-Übertragungssystem nach Anspruch 1, d a - d u r c h  g e k e n n z e i c h n e t , daß der Unterträger durch periodisches Verändern des Reflexionsfaktors mit der Frequenz $\omega_u$ gebildet wird.

1/1

FIG 2

FIG1

FIG3

FIG4

Europäisches
Patentamt

**EUROPÄISCHER RECHERCHENBERICHT**

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | G 01 S 13/74 |
| A | US - A - 4 075 632 (BALDWIN) <br><br> + Figuren 1-5 + <br><br> -- | 1,2 | |
| D | DE - B2 - 2 524 571 (RCA) <br><br> + Figur 1 + <br><br> ---- | 1 | |

**RECHERCHIERTE SACHGEBIETE (Int. Cl.³)**

G 01 S 13/00

H 04 B 1/00

B 61 L 25/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | |
|---|---|---|
| **Recherchenort** <br> WIEN | **Abschlußdatum der Recherche** <br> 25-03-1980 | **Prüfer** <br> DRÖSCHER |

EPA form 1503.1   06.78